# Europäisches Patentamt
# European Patent Office
# Office européen des brevets

(19)

(11) Numéro de publication: **0 059 139**
**B1**

(12) **FASCICULE DE BREVET EUROPEEN**

(45) Date de publication du fascicule du brevet:
**12.09.84**

(51) Int. Cl.³: **B 60 T 13/24**

(21) Numéro de dépôt: **82400262.0**

(22) Date de dépôt: **15.02.82**

(54) Servomoteur d'assistance au freinage à course morte d'actionnement réduite.

(30) Priorité: **19.02.81  FR 8103270**

(43) Date de publication de la demande:
**01.09.82 Bulletin 82/35**

(45) Mention de la délivrance du brevet:
**12.09.84 Bulletin 84/37**

(84) Etats contractants désignés:
**DE GB IT**

(56) Documents cités:
**DE - A - 2 461 200**
**FR - A - 1 420 988**
**FR - A - 1 562 332**
**GB - A - 1 161 142**
**GB - A - 2 036 221**

(73) Titulaire: **SOCIETE ANONYME D.B.A., Centre Paris Pleyel, F-93521 St-Denis Cédex 01 (FR)**

(72) Inventeur: **Meynier, Guy, 13, Allée des Sycomores, F-93140 Bondy (FR)**

(74) Mandataire: **Poidatz, Emmanuel et al, Service Brevets Bendix 44 rue François 1er, F-75008 Paris (FR)**

## Description

L'invention concerne un servomoteur d'assistance au freinage à course morte d'actionnement réduite et plus particulièrement des perfectionnements au mécanisme d'actionnement de ce servomoteur permettant d'obtenir une telle réduction de course morte sans pour autant diminuer la levée de clapet lors du relâchement du frein.

Un servomoteur d'assistance au freinage classique, tel que décrit dans le document BG-A N° 2036221, comprend une première chambre destinée à être connectée à une source de dépression, une seconde chambre séparée de la première par un piston-moteur susceptible, par déplacement à partir d'une position de repos, d'actionner un maître-cylindre de freinage, le piston-moteur comportant une vanne à trois voies actionnée par une tige de commande pour mettre la seconde chambre sélectivement en communication avec la première chambre ou avec l'atmosphère, cette vanne comportant un siège mobile formé à une extrémité d'un noyau solidaire de la tige de commande et monté coulissant axialement dans le piston-moteur; un siège annulaire défini dans le piston-moteur autour du siège mobile, et un clapet annulaire mobile sollicité élastiquement axialement dans la direction vers les sièges mobile et annulaire avec lesquels il est susceptible de coopérer, le siège mobile étant sollicité élastiquement dans la direction vers le clapet annulaire mobile de sorte que, en position de repos du servomoteur, le clapet annulaire soit en contact avec le siège mobile et écarté du siège annulaire d'une distance représentant la course morte d'actionnement du servomoteur.

La position de repos d'un tel servomoteur est normalement définie par un contact mécanique du noyau coulissant formant le siège mobile contre une cale, appelée clé d'arrêt, solidaire du piston-moteur. Le coulissement axial du noyau par rapport au piston-moteur est limité par une certaine distance axiale calculée pour garantir une levée convenable du clapet mobile au relâchement de la pédale, assurant un bon passage de l'air. Cette structure fonctionne de façon satisfaisante mais impose une course morte relativement importante à l'application du freinage, qui est représentée par la distance axiale séparant le clapet mobile du siège annulaire, dans la position de repos du système. La réduction de cette course morte est une préoccupation actuelle des constructeurs, notamment en raison du fait qu'elle se trouve multipliée par le rapport de la pédale de freinage et que, par conséquent, le moindre gain au niveau de cette course morte peut se traduire par un gain de place notable dans l'habitacle de l'automobile.

L'invention répond à cette préoccupation en proposant un agencement de servomoteur offrant une course morte d'actionnement faible tout en maintenant une levée de clapet convenable pour le bon fonctionnement de l'ensemble formant vanne à trois voies.

Pour ce faire, selon l'invention, le servomoteur comporte en outre une butée mobile s'étendant sensiblement perpendiculairement à la tige de commande et sollicitée élastiquement dans la direction opposée à la direction de sollicitation du siège mobile vers le clapet annulaire mobile, pour porter normalement, dans ladite position de repos, contre un appui fixe par rapport au piston-moteur, cette butée mobile coopérant avec une surface de butée de la tige de commande dirigée dans ladite direction de sollicitation du siège mobile pour maintenir, dans ladite position de repos, le clapet annulaire mobile à une faible distance du siège annulaire.

Ainsi, nonobstant la faible course morte d'actionnement, au relâchement de la pédale, la butée mobile peut se rétracter axialement contre la force la sollicitant élastiquement et ne peut donc pas constituer un obstacle à la levée du clapet mobile. Avec un tel agencement, la position de repos des éléments de la vanne n'est plus définie par le contact entre un épaulement du noyau et la clé de verrouillage.

L'invention sera mieux comprise et d'autres avantages de celle-ci apparaîtront mieux à la lumière de la description qui va suivre de deux servomoteurs d'assistance au freinage, donnée en référence aux dessins annexés dans lesquels:

la fig. 1 est une vue schématique en coupe d'un servomoteur d'assistance au freinage classique, et

la fig. 2 est une vue analogue d'un servomoteur d'assistance au freinage conforme à l'invention.

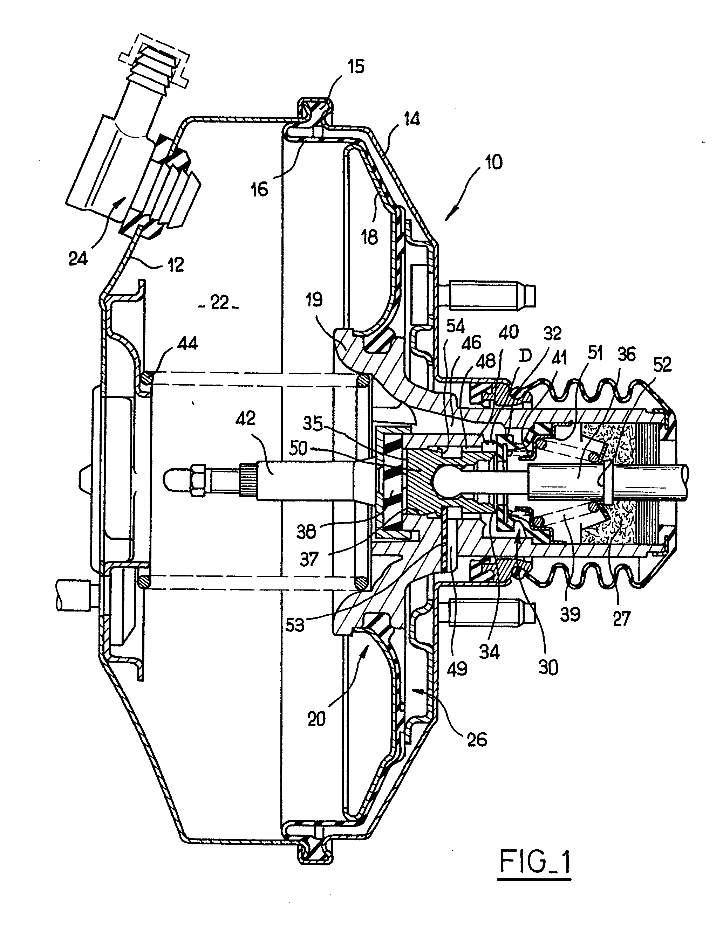

En se reportant à la fig. 1, le servomoteur d'assistance au freinage classique, tel que représenté, comporte un boîtier 10 formé de deux coquilles 12 et 14 assemblées à leur périphérie de façon à enserrer le bourrelet externe 15 d'une membrane souple 16 constituant en association avec un plateau rigide 18 et un corps central 19, un ensemble piston-moteur 20. Les bords d'assemblage des coquilles 12 et 14 sont conformés pour être assemblés par sertissage en emprisonnant le bourrelet 15. De cette façon, le piston-moteur 20 sépare le boîtier 10 en deux chambres, respectivement une première chambre ou chambre basse pression 22 destinée à être reliée en permanence à une source de vide par l'intermédiaire d'un embout de raccordement 24 et une seconde chambre ou chambre haute pression 26 susceptible d'être mise en communication soit avec la chambre 22, soit avec l'atmosphère, cela par l'intermédiaire d'un filtre 27. Le corps central 19 se prolonge vers l'arrière, c'est-à-dire dans la direction des organes d'actionnement du servomoteur, de façon à abriter un dispositif formant vanne de commande 30, du type à trois voies. Cette dernière est essentiellement constituée d'un clapet annulaire mobile 32 en caoutchouc, susceptible de venir alternativement en appui, d'une part, contre un siège mobile 34 solidaire d'une tige de commande d'entrée 36, reliée à la pédale d'actionnement de frein (non représentée) et, d'autre part, contre un siège annulaire 40 défini dans le corps central 19 tout autour du siège mobile 34. Le corps central 19 comporte un alésage axial 37 constituant une portée de coulissement pour un noyau 50 à l'extrémité duquel est matérialisé le siège mobile 34. Le noyau coulissant 50, articulé par une rotule à la tige 36, se termine par une surface de butée 35 susceptible d'entrer en engagement avec un dispositif de réaction 38 composé d'une rondelle de caoutchouc. La face opposée du dispositif de réaction 38 coopère avec une tige de poussée 42 qui est susceptible de mettre en œuvre la commande d'un maître-cylindre de freinage (non représenté). Un ressort 44 prend appui sur le renfort de la coquille 12 et sollicite le piston moteur 20, dans sa position de repos telle que représentée sur le dessin, contre la coquille 14. Lorsque le servomoteur est dans cette position de repos, le clapet mobile 32 est dégagé du siège annulaire 40 de façon à permettre aux deux chambres 22 et 26 de communiquer par l'intermédiaire de passages tels que 46, 48 et 49, à travers le corps 19. Plus précisément, les passages 46 permettent une communication de fluide entre la chambre 22 et l'ouverture du siège annulaire 40 tandis que les passages 48 et 49 permettent une communication de fluide entre la seconde chambre 26 et l'ouverture du siège annulaire 40. Ainsi, lorsque le servomoteur est dans sa position de repos telle que représentée, les deux chambres 22 et 26 communiquent effectivement et le même niveau de dépression règne dans ces deux chambres car le clapet 32, qui contrôle la mise en communication avec l'atmosphère par l'intermédiaire du filtre 27, est en appui étanche contre le siège 34 sous l'action de la différence de pression et de ressorts tels que 39 et 41. Le ressort 39 est monté en compression entre une collerette d'appui 51 et un premier épaulement 52 de la tige de commande 36 de sorte que le siège mobile 34 est normalement sollicité dans la direction du clapet annulaire 32. Le ressort 41 est monté en compression entre la collerette d'appui 51 et le clapet mobile 32 pour le solliciter dans la direction des sièges coaxiaux 34 et 40. La collerette d'appui 51 est elle-même en butée contre une embase annulaire du clapet 32, solidaire du corps central 19. Le coulissement axial du noyau 50 à l'intérieur de l'alésage 37 est limité sur une certaine distance axiale par coopération d'une gorge annulaire 54, de largeur prédéterminée, pratiquée à la surface du noyau 50 et d'une clé de verrouillage 53, solidaire du corps central 19. Le contact avec l'une des extrémités de la gorge 52 et la clé 53 détermine la position de repos du mécanisme de la vanne, laquelle est donc pourvue, par construction, d'une course morte d'actionnement D représentée par la distance axiale entre le siège 40 et le clapet mobile 32. La valeur de cette course morte D correspond à la levée du clapet nécessaire, à la fin d'une phase de freinage, pour assurer un temps de réponse convenable du servomoteur, au retour en position de repos.

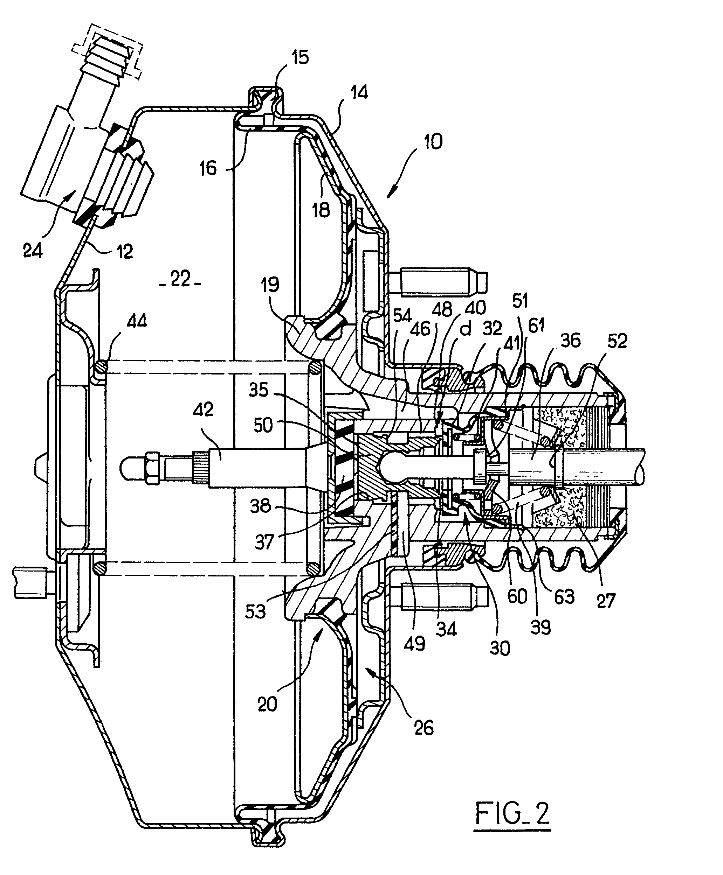

La fig. 2 montre le perfectionnement conforme à l'invention adapté au servomoteur classique qui vient d'être décrit. Par conséquent, les éléments constitutifs non modifiés de ce servomoteur portent les mêmes chiffres de référence et ne seront pas décrits une nouvelle fois. Le mécanisme de la vanne est complété par une butée mobile 60

s'étendant sensiblement perpendiculairement à l'axe de la tige de commande 36 et maintenue par un élément élastique, constitué par le ressort 39, contre la collerette d'appui 51. La butée 60 coopère avec un second épaulement 61 de la tige d'actionnement 36 pour définir une nouvelle position de repos des éléments constitutifs de la vanne à trois voies 30. L'emplacement de l'épaulement 61 est donc choisi pour maintenir le clapet 32 à une faible distance d du siège annulaire 40, par l'intermédiaire de la position de repos du siège mobile 34. Dans cette nouvelle position de repos à une course morte réduite, les positions relatives des différents éléments de la vanne ne sont donc plus déterminées par la coopération de la gorge annulaire 54 et de la clé 53. Au contraire, comme on le voit clairement sur la fig. 2, les bords de la gorge 54 sont maintenus éloignés de la clé 53 par le positionnement de la tige de commande (et du noyau 50) imposé par la butée mobile 60. Le rôle de la clé 53 se borne donc à fixer les limites de l'enfoncement maximal du noyau 50 à l'intérieur de l'alésage 37 et de la valeur maximale de la levée du clapet au relâchement du frein. Il est à noter que la collerette d'appui 51 comporte avantageusement à son périmètre radialement le plus externe des pattes de clipsage 63 améliorant son immobilisation à l'intérieur du corps central 19. Dans l'exemple décrit, la butée mobile a avantageusement la forme d'une rondelle, ajourée pour permettre le passage de l'air entre le filtre 27 et la chambre 26 et conformée avec un profil sensiblement sphérique dans sa partie centrale. Cette dernière particularité permet un débattement angulaire de la tige de commande autour de sa rotule de liaison avec le noyau 50, l'épaulement 61 prenant appui à l'intérieur de cette portion sphérique. L'épaulement 61 peut être matérialisé par l'une des extrémités d'une gorge annulaire pratiquée dans la tige de commande 36 et dont la largeur est suffisante pour ne pas entraver le mouvement d'actionnement de la tige.

Le servomoteur d'assistance au freinage conforme à l'invention fonctionne de la façon suivante. En l'absence de freinage, la situation est telle qu'illustrée à la fig. 2, les chambres 22 et 26 sont en communication et reliées au collecteur d'admission. Il règne donc une basse pression dans ces deux chambres. Lorsque le conducteur actionne la pédale de frein et donc la tige de commande 36, le noyau 50 est repoussé à l'intérieur de l'alésage 37 de sorte qu'après une course morte d relativement faible, la chambre 26 se trouve isolée de la chambre 22. Un enfoncement supplémentaire du noyau 50 met la chambre 26 en communication avec l'atmosphère puisque le clapet 32 se sépare du siège mobile 34. A partir de ce moment, l'ensemble du piston moteur 20 se déplace de la droite vers la gauche en considérant la fig. 2 et actionne le maître-cylindre. Au relâchement du freinage, le temps de réponse du servomoteur, c'est-à-dire le temps nécessaire au piston moteur pour reprendre sa position de repos, dépend notamment de la levée du clapet 32 par rapport au siège annulaire 40. Celle-ci peut être aussi importante que dans un servomoteur classique, grâce à un léger retrait de la butée 60, entraînée par le mouvement de rappel de la tige de commande 36. Le rappel de cette dernière est dû en partie à l'action du ressort de rappel de la pédale et surtout à la poussée appliquée à la tige 42 par la réaction hydraulique du maître-cylindre, transmise à travers le disque de réaction. Dans cette phase, le ressort 41 est comprimé pour permettre l'augmentation de la levée du clapet. Au repos ce ressort reprend sa position initiale et le jeu d réapparaît entre siège et clapet d'où une faible course morte à l'application suivante. La butée 60 revient rapidement en appui sur la collerette 51 sous l'action du ressort 39.

Bien entendu, l'invention n'est pas limitée au mode de réalisation qui vient d'être décrit, mais comprend tous les équivalents techniques des moyens mis en jeu si ceux-ci le sont dans le cadre des revendications qui suivent.

## Revendications

1. Servomoteur d'assistance au freinage, du type à dépression, comprenant une première chambre (22) destinée à être connectée à une source de dépression, une seconde chambre (26) séparée de la première par un piston-moteur (20) susceptible, par déplacement à partir d'une position de repos, d'actionner un maître-cylindre de freinage, le piston-moteur comportant une vanne à trois voies (30) actionnée par une tige de commande (36) pour mettre la seconde chambre sélectivement en communication avec la première chambre ou avec l'atmosphère, cette vanne (30) comportant: un siège mobile (34) formé à une extrémité d'un noyau (50) solidaire de la tige de commande (36) et monté coulissant axialement dans le piston-moteur (30); un siège annulaire (40) défini dans le piston-moteur autour du siège mobile (34), et un clapet annulaire mobile (32) sollicité élastiquement axialement (41) dans la direction vers les sièges mobile (34) et annulaire (40) avec lesquels il est susceptible de coopérer, le siège mobile (34) étant sollicité élastiquement (39) dans la direction vers le clapet annulaire mobile (32) de sorte que, en position de repos du servomoteur, le clapet annulaire (32) soit en contact avec le siège mobile (34) et écarté du siège annulaire (40) d'une distance représentant la course morte d'actionnement du servomoteur, caractérisé en ce qu'il comporte une butée mobile (60) s'étendant sensiblement perpendiculairement à la tige de commande (36) et sollicitée élastiquement (39) dans la direction opposée à la direction de sollicitation du siège mobile (34) vers le clapet annulaire mobile (32) pour porter normalement, dans ladite position de repos, contre un appui (51) fixe par rapport au piston-moteur (20), cette butée mobile (60) coopérant avec une surface de butée (61) de la tige de commande dirigée dans ladite direction de sollicitation du siège mobile (34) pour maintenir, dans ladite position de repos, le clapet annulaire mobile (32) à une faible distance (d) du siège annulaire (40).

2. Servomoteur selon la revendication 1, caractérisé en ce que, le siège mobile (34) étant sollicité dans la direction dudit clapet annulaire (32) par au moins un ressort de compression (39) intercalé entre un appui fixe (51) du piston-moteur (20) et un premier épaulement (52) de la tige de commande, la sollicitation de la butée mobile (60) est assurée par ledit ressort (39) contre ledit appui fixe (51), la surface de butée de la tige de commande étant constituée par un second épaulement (61) de cette dernière.

3. Servomoteur selon l'une des revendications 1 ou 2, du type dans lequel le coulissement axial du noyau (50) par rapport audit piston-moteur (20) est limité sur une certaine distance axiale par la coopération d'une gorge (54) de largeur déterminée et d'une clé de verrouillage (53) appartenant respectivement à chacun de ces deux éléments, caractérisé en ce que, dans ladite position de repos, les bords axialement opposés de la gorge sont maintenus éloignés de la clé par le positionnement de ladite tige de commande (36) imposé par la butée mobile (60).

4. Servomoteur selon l'une des revendications 1 à 3, caractérisé en ce que la butée mobile (60) est matérialisée par une rondelle ajourée.

5. Servomoteur selon la revendication 4, caractérisé en ce que la rondelle a un profil sensiblement sphérique au moins dans sa partie centrale coopérant avec la surface de butée (61) de la tige de commande.

## Patentansprüche

1. Niederdruck-Servomotor zur Bremsbetätigung, mit einer ersten Kammer (22), die an eine Niederdruckquelle anschliessbar ist, einer zweiten Kammer (26), die von der ersten durch einen Betätigungskolben (20) getrennt ist, der bei einer Verschiebung aus einer Ruhelage einen Hauptbremszylinder betätigt, wobei der Betätigungskolben ein Dreiwegeventil (30) aufweist, das durch eine Betätigungsstange (36) betätigbar ist, um die zweite Kammer wahlweise mit der ersten Kammer oder mit der Atmosphäre zu verbinden, wobei das Dreiwegeventil (30) aufweist: einen beweglichen Ventilsitz (34), der am Ende eines Kerns (50) angeformt ist, der mit der Betätigungsstange (36) einstückig ausgebildet und im Betätigungskolben (30) axial gleitbar gelagert ist; einen ringförmigen Ventilsitz (50), der im Betätigungskolben um den beweglichen Ventilsitz (34) herum gebildet ist, und einen beweglichen ringförmigen Ventilkörper (32), der axial (41) in Richtung auf den beweglichen Ventilsitz (34) und den ringförmigen Ventilsitz (40), mit denen er zusammenwirkt, elastisch vorgespannt ist, wobei der bewegliche Ventilsitz (34) in Richtung auf den beweglichen ringförmigen Ventilkörper (32) in der Ruhestellung des Servomotors mit dem beweglichen Ventilsitz (34) in Berührung steht und von dem ringförmigen Ventilsitz (40) einen Abstand hat, der dem Totgang des Servomotors entspricht, gekennzeichnet durch einen beweglichen Anschlag (60), der sich im wesentlichen senkrecht zur Betätigungsstange (36) erstreckt und der entgegengesetzt zur Vorspannrichtung des beweglichen Ventilsitzes (34) in Richtung auf den beweglichen Ventilkörper (32) elastisch vorgespannt ist, um normalerweise in der Ruhestellung an einer bezüglich des Betätigungskolbens (20) festgelegten Abstützung (51) anzuliegen, wobei der bewegliche Anschlag (60) mit einer Anschlagfläche (61) der Betätigungsstange zusammenwirkt, der in die Richtung der Vorspannung des beweglichen Ventilsitzes (34) zeigt, um in der Ruhestellung den beweglichen Ventilkörper (32) in einem kleinen Abstand (d) zum ringförmigen Ventilsitz (40) zu halten.

2. Servomotor nach Anspruch 1, dadurch gekennzeichnet, dass der bewegliche Ventilsitz (34) in Richtung auf den Ventilkörper (32) durch mindestens eine Druckfeder (39) vorgespannt ist, die zwischen einer festen Abstützung (51) des Betätigungskolbens (20) und einer ersten Schulter (52) der Betätigungsstange angeordnet ist, und dass die Vorspannung des beweglichen Anschlages (60) durch diese Feder (39) an der ortsfesten Abstützung (51) sichergestellt wird, wobei die Anschlagfläche der Betätigungsstange durch eine zweite Schulter (61) der letzteren gebildet wird.

3. Servomotor nach einem der Ansprüche 1 oder 2, bei dem die axiale Gleitbewegung des Kerns (50) bezüglich des Betätigungskolbens (20) auf eine bestimmte axiale Strecke begrenzt wird durch Zusammenwirken einer Ringnut (54) vorgegebener Breite und eines Verriegelungsgliedes (53), die jeweils diesen beiden Elementen zugeordnet sind, dadurch gekennzeichnet, dass die gegenüberliegenden axialen Ränder der Ringnut in der Ruhestellung von dem Verriegelungsglied auf Abstand gehalten werden, und zwar durch die Lage der Betätigungsstange (36), die ihr durch den beweglichen Anschlag (60) auferlegt wird.

4. Servomotor nach einem der Ansprüche 1 bis 3, dadurch gekennzeichnet, dass der bewegliche Anschlag (60) aus einer durchbrochenen Scheibe besteht.

5. Servomotor nach Anspruch 4, dadurch gekennzeichnet, dass die Scheibe ein im wesentlichen sphärisches Profil zumindest in ihrem mit der Anschlagfläche (61) der Betätigungsstange zusammenwirkenden mittleren Abschnitt hat.

## Claims

1. A brake assistance servo motor of the vacuum type, comprising a first chamber (22) adapted to be connected to a vacuum source, a second chamber (26) separated from the first one by a piston actuator (20) adapted to actuate a brake master cylinder by displacement from a rest position, the piston actuator comprising a three-way-valve (30) actuated by an actuating rod (36) in order to selectively communicate the first chamber to the second chamber or the atmosphere, said valve (30) comprising: a movable seat (34) formed at one end of a core member (50) integral with the actuating rod (36) and axially slidably mounted in the piston actuator (30); an annular seat (40) defined in the piston actuator around the movable seat (34), and a movable annular valve member (32) axially and resiliently biased (41) in the direction towards the movable and annular seats (34, 40) with which they are adapted to cooperate, the movable seat (34) being resiliently biased (39) in the direction towards the movable annular valve member (32) such that in the rest position of the servo motor the annular valve member (32) is in contact with the movable seat (34) and spaced from the annular seat (40) by a distance representing the lost motion of the servo motor, characterised in that it comprises a movable abutment (60) extending substantially perpendicularly to the actuating rod (36) and being resiliently biased (39) in the direction opposite to the bias direction of the movable seat (34) towards the movable annular valve member (32) in order to normally abut, in said rest position, a support (51) fixed with respect to the piston actuator (20), said movable abutment (60) cooperating with an abutment surface (61) of the actuating rod directed in the bias direction of the movable seat (34) in order to hold the movable annular valve member (32) spaced from said annular seat (40) by a small distance (d) in said rest position.

2. The servo motor of claim 1, characterised in that the movable seat (34) is biased in the direction of the annular valve member (32) by at least one compression spring (39) interposed between a fixed support (51) of the piston actuator (20) and a first shoulder (52) of the actuating rod and the biassing of the movable abutment (60) is achieved by said spring (39) against said fixed abutment (51), the abutment surface of the actuating rod being constituted by a second shoulder (61) of the latter.

3. The servo motor of claim 1 or 2, of the type wherein the axial sliding movement of the core member (50) with respect to said piston actuator (20) is limited to a certain axial distance by cooperation of a throat (54) of a predetermined width and a locking key (53) associated to each of said two elements, respectively, characterised in that in said rest position the axial opposite edges of the throat are held spaced from said locking key by the positioning of said actuating rod (36) as imposed by the movable abutment (60).

4. The servo motor of any of claims 1 to 3, characterised in that the movable abutment (60) is comprising of a recessed disk.

5. The servo motor of claim 4, characterised in that the disk has a substantially spherical profile at least in its central portion cooperating with the abutment surface (61) of the actuating rod.

FIG_1

0 059 139

FIG. 2

9